Europäisches Patentamt

European Patent Office

Office européen des brevets

(19)

(11) Veröffentlichungsnummer: **0 337 259**
**A2**

(12) **EUROPÄISCHE PATENTANMELDUNG**

(21) Anmeldenummer: 89105920.6

(22) Anmeldetag: 05.04.89

(51) Int. Cl.⁴: **C08F 220/04** , **C08F 2/06** ,
**C11D 3/37**

(30) Priorität: 14.04.88 DE 3812402

(43) Veröffentlichungstag der Anmeldung:
18.10.89 Patentblatt 89/42

(84) Benannte Vertragsstaaten:
**AT BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Boeckh, Dieter, Dr.**
**Trifelsring 63**
**D-6703 Limburgerhof(DE)**
Erfinder: **Seelmann-Eggebert, Hans-Peter, Dr.**
**Friedrichstrasse 8**
**D-6905 Schriesheim(DE)**
Erfinder: **Hartmann, Heinrich, Dr.**
**Weinheimer Strasse 46**
**D-6703 Limburgerhof(DE)**
Erfinder: **Trieselt, Wolfgang, Dr.**
**Alwin-Mittasch-Platz 1**
**D-6700 Ludwigshafen(DE)**
Erfinder: **Baur, Richard, Dr.**
**Nelkenstrasse 1**
**D-6704 Mutterstadt(DE)**

(54) **Verfahren zur Herstellung von wasserlöslichen Copolymerisaten auf Basis von monoethylenisch ungesättigten Carbonsäuren und ihre Verwendung.**

(57) Verfahren zur Herstellung von wasserlöslichen Copolymerisaten mit K-Werten von 8 bis 100 (bestimmt am Na-Salz der Copolymerisate nach H. Fikentscher in wäßriger Lösung bei 25°C, einem pH-Wert von 7 und einer Polymerkonzentration des Na-Salzes von 1 Gew.%) durch Copolymerisieren von Monomermischungen aus

a) 98,5 bis 18,5 Mol% wenigstens einer monoethylenisch ungesättigten $C_3$- bis $C_6$-Monocarbonsäure,

b) 1,5 bis 20 Mol% wenigstens eines Comonomeren, das mindestens 2 ethylenisch ungesättigte, nicht konjugierte Doppelbindungen enthält, die durch mindestens eine Esterbindung voneinander getrennt sind,

c) 0 bis 80 Mol% wenigstens einer monoethylenisch ungesättigten $C_4$- bis $C_6$-Dicarbonsäure oder ihres Anhydrids und

d) 0 bis 20 Mol% anderen, mit den Monomeren (a), (b) und (c) copolymerisierbaren, monoethylenisch ungesättigten Comonomeren,

wobei die Summe der Angaben in Mol% (a) bis (d) immer 100 beträgt, in Gegenwart von Polymerisationsinitiatoren und Polymerisationsreglern bei Temperaturen bis zu 200°C in mindestens einem inerten organischen Lösemittel.

EP 0 337 259 A2

## Verfahren zur Herstellung von wasserlöslichen Copolymerisaten auf Basis von monoethylenisch ungesättigten Carbonsäuren und ihre Verwendung

In der deutschen Patentanmeldung P 37 16 543.7 (DE-OS 37 16 543) werden wasserlösliche Copolymerisate beschrieben, die

a) 99,5 bis 15 Mol.% wenigstens einer monoethylenisch ungesättigten $C_3$- bis $C_6$-Monocarbonsäure,

b) 0,5 bis 20 Mol.% wenigstens eines mindestens 2 ethylenisch ungesättigte, nicht konjugierte Doppelbindungen aufweisenden Comonomers, das mindestens eine -CO-OX -Gruppe hat, in der X ein Wasserstoff-, ein Alkalimetall- oder Erdalkalimetalläquivalent oder eine Ammoniumgruppe bedeutet,

c) 0 bis 84,5 Mol.% wenigstens einer monoethylenisch ungesättigten $C_4$-bis $C_6$-Dicarbonsäure,

d) 0 bis 20 Mol.% eines oder mehrerer Hydroxyalkylester mit 2 bis 6 C-Atomen in der Hydroxyalkylgruppe von monoethylenisch ungesättigten $C_3$- bis $C_6$-Carbonsäuren und

e) 0 bis 30 Mol.% andere, mit a), b), c) und d) copolymerisierbare, wasserlösliche, monoethylenisch ungesättigte Monomere

mit der Maßgabe einpolymerisiert enthalten, daß die Summe der Angaben in Mol.% a) bis e) immer 100 beträgt und die einen K-Wert von 8 bis 120 (bestimmt am Na-Salz der Copolymerisate nach H. Fikentscher in wäßriger Lösung bei 25° C, einen pH-Wert von 7 und einer Polymerkonzentration des Na-Salzes von 1 Gew.%) haben.

Die Copolymerisate werden in Mengen bis zu 25, vorzugsweise 2 bis 10 Gew.%, Wasch- und Reinigungsmittelmischungen zugesetzt.

In der deutschen Patentanmeldung P 37 16 544.5 (DE-OS 37 16 544) werden wasserlösliche Copolymerisate beschrieben, die

a) 99,5 bis 15 Mol.% wenigstens einer monoethylenisch ungesättigten $C_3$- bis $C_6$-Monocarbonsäure,

b) 0,5 bis 20 Mol% wenigstens eines mindestens zwei ethylenisch ungesättigte, nicht konjugierte Doppelbindungen aufweisenden Comonomeren, das sich von Estern ableitet, die erhältlich sind durch Veresterung von

b1) monoethylenisch ungesättigten $C_3$- bis $C_6$-Monocarbonsäuren mit

b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10 000, Polyglycerinen eines Molekulargewichts bis 2 000, Polyvinylalkohol eines Molekulargewichts bis 10 000 und einwertigen, monoethylenisch ungesättigten $C_3$- bis $C_6$-Alkoholen,

c) 0 bis 84,5 Mol.% wenigstens einer monoethylenisch ungesättigten $C_4$-bis $C_6$-Dicarbonsäure,

d) 0 bis 20 Mol.% eines oder mehrerer Hydroxyalkylester mit 2 bis 6 C-Atomen in der Hydroxyalkylgruppe von monoethylenisch ungesättigten $C_3$- bis $C_6$-Carbonsäuren und

e) 0 bis 30 Mol.% andere, mit a), b), c) und d) copolymerisierbare, wasserlösliche, monoethylenisch ungesättigte Monomere

mit der Maßgabe einpolymerisiert enthalten, daß die Summe der Angaben in Mol.% a) bis e) immer 100 beträgt und die einen K-Wert von 8 bis 120 (bestimmt am Na-Salz der Copolymerisate nach H. Fikentscher in wäßriger Lösung bei 25° C, einen pH-Wert von 7 und einer Polymerkonzentration des Na-Salzes von 1 Gew.%) haben,

Copolymerisate dieser Art werden in Mengen von 0,5 bis 25, vorzugsweise 1 bis 15 Gew.%, in Wasch- und Reinigungsmittelformulierungen verwendet. Die in den beiden oben angegebenen Patentanmeldungen beschriebenen Copolymerisate werden ausschließlich durch Copolymerisieren der Monomeren in wäßrigem Medium hergestellt.

Der vorliegenden Erfindung liegt die Aufgabe zugrunde, die Eigenschaften der aus den oben genannten Patentanmeldungen bekannten Copolymerisate zu modifizieren.

Die Aufgabe wird erfindungsgemäß gelöst mit einem Verfahren zur Herstellung von wasserlöslichen Copolymerisaten auf Basis von monoethylenisch ungesättigten Carbonsäuren mit K-Werten von 8 bis 100 (bestimmt am Na-Salz der Copolymerisate nach H. Fikentscher in wäßriger Lösung bei 25° C, einem pH-Wert von 7 und einer Polymerkonzentration des Na-Salzes von 1 Gew.%) durch Copolymerisieren von Monomermischungen aus

(a) 98,5 bis 18,5 Mol% wenigstens einer monoethylenisch ungesättigten $C_3$- bis $C_6$-Monocarbonsäure,

(b) 1,5 bis 20 Mol% wenigstens eines Comonomeren, das mindestens zwei ethylenisch ungesättigte, nicht konjugierte Doppelbindungen enthält, die durch mindestens eine Esterbindung voneinander getrennt sind,

(c) 0 bis 80 Mol% wenigstens einer monoethylenisch ungesättigten $C_4$- bis $C_6$-Dicarbonsäure oder eines Anhydrids einer monoethylenisch ungesättigten Dicarbonsäure und

(d) 0 bis 20 Mol% anderen, mit den Monomeren (a), (b) und (c) copolymerisierbaren, monoethylenisch ungesättigten Comonomeren,

wobei die Summe der Angaben in Mol% (a) bis (d) immer 100 beträgt, in Gegenwart von Polymerisationsinitiatoren und Polymerisationsreglern bei Temperaturen bis zu 200°C, wenn die Copolymerisation in mindestens einem inerten organischen Lösemittel durchgeführt wird. Als inerte organische Lösemittel eignen sich vor allem Ether, Carbonsäureester, Kohlenwasserstoffe, halogenierte Kohlenwasserstoffe, gesättigte aliphatische Ketone und Alkohole mit der Einschränkung, daß sie nur dann als Lösemittel in Betracht kommen, wenn als Comonomer (b) Dicarbonsäuren eingesetzt werden und keine Dicarbonsäureanhydride. Sofern jedoch bereits während der Copolymerisation eine Modifizierung der Dicarbonsäureanhydride beabsichtigt ist, kann die Copolymerisation von Dicarbonsäureanhydriden auch in Gegenwart von Alkoholen vorgenommen werden.

Als Komponente (a) der Monomermischung zur Herstellung der wasserlöslichen Copolymerisate kommen monoethylenisch ungesättigte $C_3$- bis $C_6$-Monocarbonsäuren in Betracht, z.B. Acrylsäure, Methacrylsäure, Ethacrylsäure, Vinylessigsäure, Allylessigsäure und Crotonsäure. Vorzugsweise verwendet man als Monomer der Komponente (a) Acrylsäure und/oder Methacrylsäure. Die Monomeren der Komponente (a) sind in einer Menge von 98,5 bis 18,5, vorzugsweise 98,5 bis 35 Mol% am Aufbau der Copolymerisate beteiligt.

Als Komponente (b) der Monomermischungen zur Herstellung der Copolymerisate kommen solche Comonomeren in Betracht, die mindestens zwei ethylenisch ungesättigte, nicht konjugierte Doppelbindungen enthalten. Die Comonomeren der Gruppe (b) sind beispielsweise erhältlich durch Umsetzung von

b1) Maleinsäureanhydrid, Itaconsäureanhydrid, Citraconsäureanhydrid oder deren Gemischen mit

b2) mehrwertigen, 2 bis 6 C-Atome aufweisenden Alkoholen, Polyalkylenglykolen bis zu einem Molekulargewicht von 10.000, Polyglycerinen eines Molekulargewichts bis 2.000, Aminoalkoholen, Hydroxyamino- oder -diaminocarbonsäuren, wie insbesondere Lysin und Serin, wasserlöslichen Copolymerisaten aus Ethylenoxid und Kohlendioxid, Allylalkohol, Hydroxyalkylester mit 2 bis 6 C-Atomen in der Hydroxyalkylgruppe von monoethylenisch ungesättigten $C_3$- bis $C_6$-Carbonsäuren oder von gesättigten $C_3$- bis $C_6$-Hydroxycarbonsäuren oder deren Mischungen.

Mehrwertige, 2 bis 6 C-Atome aufweisende Alkohole sind beispielsweise Glykol, Glycerin, Pentaerythrit und Monosaccharide, wie Glucose, Mannose, Galactose, Uronsäuren, wie Galacturonsäure, und Zuckersäuren, wie Schleimsäure oder Galactonsäure.

Unter Polyalkylenglykolen mit Molekulargewichten bis zu 10 000 sollen die Anlagerungsprodukte von Ethylenoxid, Propylenoxid, n-Butylenoxid und Isobutylenoxid oder deren Gemischen an mehrwertige, 2 bis 6 Kohlenstoffatome aufweisende Alkohole verstanden werden, z.B. die Anlagerungsprodukte von Ethylenoxid an Glykol, Anlagerungsprodukte von Ethylenoxid an Glycerin, Anlagerungsprodukte von Ethylenoxid an Pentaerythrit, Sorbit, Anlagerungsprodukte von Ethylenoxid an Monosaccharide, sowie die Anlagerungsprodukte von Mischungen der genannten Alkylenoxide an mehrwertige Alkohole. Bei diesen Anlagerungsprodukten kann es sich um Blockcopolymerisate von Ethylenoxid und Propylenoxid, von Ethylenoxid und Butylenoxiden oder von Ethylenoxid, Propylenoxid und Butylenoxiden handeln. Außer den Blockcopolymerisaten kommen solche Anlagerungsprodukte in Betracht, die die genannten Alkylenoxide in statistischer Verteilung einpolymerisiert enthalten. Das Molekulargewicht der Polyalkylenglykole beträgt zweckmäßigerweise bis zu 5.000, vorzugsweise bis 2.000. Von den wasserlöslichen Polyalkylenglykolen verwendet man vorzugsweise Diethylenglykol, Triethylenglykol, Tetraethylenglykol und Polyethylenglykol eines Molekulargewichts von bis zu 1.500.

Als Komponente (b2) kommen außerdem Polyglycerine eines Molekulargewichts bis 2.000 in Betracht. Vorzugsweise verwendet man von dieser Stoffklasse Diglycerin, Triglycerin und Tetraglycerin.

Als Komponente (b2) kommen außerdem Aminoalkohole, wie Ethanolamin, 2-Aminopropanol-1, Neopentanolamin und 1-Methylamino-2-propanol, in Betracht.

Als Komponente (b2) eignen sich außerdem Copolymerisate aus Ethylenoxid und Kohlendioxid, die durch Copolymerisieren von Ethylenoxid und Kohlendioxid erhältlich sind. Weitere geeignete Verbindungen der Komponente b2) sind Lysin, Serin und Hydroxyalkylester mit 2 bis 6 C-Atomen in der Hydroxyalkylgruppe von monoethylenisch ungesättigten $C_3$- bis $C_6$-Mono- und Dicarbonsäuren.

Die Hydroxyalkylestergruppen der zuletzt genannten Monomeren leiten sich von mehrwertigen Alkoholen ab, z.B. Glykol, Glycerin, Propandiol-1,2, Propandiol-1,3, Butandiol-1,4, Butandiol-1,3, Butandiol-2,3, Gemischen der Butandiole oder Propandiole, Hexandiol-1,6 und Neopentylglykol. Die mehrwertigen Alkohole werden mit monoethylenisch ungesättigten $C_3$- bis $C_6$-Carbonsäuren verestert. Hierbei handelt es sich um diejenigen Carbonsäuren, die oben unter a) und c) genannt sind. Als Komponente b2) eignen sich somit beispielsweise Hydroxyethylacrylat, Hydroxyethylmethacrylat, Hydroxy-n-propylmethacrylat, Hydroxy-n-propylacrylat, Hydroxyisopropylacrylat, Hydroxyisopropylmethacrylat, Hydroxy-n-butylacrylat, Hydroxyisobutylacrylat, Hydroxy-n-butylmethacrylat, Hydroxyisobutylmethacrylat, Hydroxyethylmonomaleinat, Hydroxyethyldimaleinat, Hydroxypropylmonomaleinat, Hydroxypropyldimaleinat, Hydroxy-n-butylmonomaleinat, Hydroxy-n-butyldimaleinat und Hydroxyethylmonoitaconat. Von den Hydroxyalkylestern der monoethylenisch ungesättigten Dicarbonsäuren kommen sowohl die Mono- und die Diester der Dicarbonsäuren mit den oben genannten mehrwertigen Alkoholen in Betracht.

Außerdem eignen sich Hydroxyalkylester von gesättigten $C_3$- bis $C_6$-Hydroxycarbonsäuren, wie Hydroxyessigsäureglykolmonoester, Milchsäureglykolmonoester und Hydroxypivalinsäure-neopentylglykolester.

Vorzugsweise werden Comonomere (b) aus Maleinsäureanhydrid und Ethylenglykol, Polyethylenglykol eines Molekulargewichts bis 2.000, Glycerin, Diglycerin, Triglycerin, Tetraglycerin, sowie Polyglycerinen eines Molekulargewichts bis 2.000, Pentaerythrit, Monosacchariden, Neopentylglykol, $\alpha,\omega$-Diolen mit 3 bis 6 C-Atomen, und Hydroxypivalinsäureneopentylglykolmonoester eingesetzt.

Comonomere (b), die sich von Ethylenglykol und Polyethylenglykol ableiten, können z.B. mit Hilfe folgender Formel dargestellt werden:

$$HOOC-CH=CH-CO-O\{CH_2-CH_2-O\}_n-CO-CH=CH-COOH \qquad (I),$$

in der

n = 1 bis 50, vorzugsweise 2 bis 40 bedeutet.

Mindestens 2 OH-Gruppen der unter (b2) angegebenen Hydroxylgruppen enthaltenden Verbindungen sind mit einem Anhydrid der Komponente (b1) verestert. Pro Mol OH-Gruppe wird dabei 1 Mol Anhydrid eingesetzt, um zu den Comonomeren (b) zu gelangen. Die Comonomeren (b) enthalten mindestens 2 ethylenisch ungesättigte, nicht konjugierte Doppelbindungen und mindestens eine C-O-OH-Gruppe, wobei die Doppelbindungen durch mindestens eine Esterbindung voneinander getrennt sind, d.h. eine Gruppe der Struktur

$$- \underset{O}{\overset{\parallel}{C}}-O-.$$

Als Comonomer (b) kommen außerdem solche Verbindungen in Betracht, die zwei ethylenisch ungesättigte, nicht konjugierte Doppelbindungen aufweisen und die sich von Estern ableiten, die erhältlich sind durch Veresterung von

(b3) Acrylsäure, Methacrylsäure, Crotonsäure, Vinylessigsäure, Methacrylsäureanhydrid oder deren Mischungen mit

(b2) mindestens zweiwertigen 2 bis 6 C-Atome aufweisenden Alkoholen, Polyalkylenglykolen bis zu einem Molekulargewicht von 10 000, Polyglycerinen eines Molekulargewichts bis 2 000, Aminoalkoholen, Hydroxyamino- oder Hydroxydiaminocarbonsäuren, wasserlöslichen Copolymerisaten aus Ethylenoxid und Kohlendioxid, Allylalkohol, Hydroxyalkylester mit 2 bis 6 C-Atomen in der Hydroxyalkylgruppe von monoethylenisch ungesättigten $C_3$- bis $C_6$-Carbonsäuren oder von gesättigten $C_3$- bis $C_6$-Hydroxycarbonsäuren oder deren Mischungen.

Bei der Veresterung wird das Molverhältnis von Säure- : Alkoholkomponente, d. h. (b3):(b2) so eingestellt, daß Comonomere entstehen, die mindestens zwei ethylenisch ungesättigte, nicht konjugierte Doppelbindungen aufweisen. So werden beispielsweise Glykole und Polyethylenglykole im Molverhältnis 1:2 mit Acrylsäure bzw. Methacrylsäure umgesetzt, während bei der Umsetzung von Allylalkohol mit Acrylsäure oder Methacrylsäure das Molverhältnis 1:1 beträgt.

Bei der oben beschriebenen Herstellung der Estergruppen enthaltenden Comonomeren kann man anstelle der freien Säuren als Komponenten (b3) auch deren Ester bildende Derivate wie Anhydride, Säurehalogenide oder Säurester, insbesondere solche mit $C_1$- bis $C_3$ einwertigen Alkoholen, einsetzen. Von den Anhydriden kommt insbesondere Methacrylsäureanhydrid in Betracht.

Es ist selbstverständlich möglich, auch Mischungen von verschiedenen Comonomeren der Gruppe (b) einzusetzen. Von besonderem Interesse sind solche Copolymerisate, zu deren Herstellung man die Comonomeren (b), die durch Umsetzung von (b1) mit (b2) erhältlich sind, teilweise durch solche Comonomeren ersetzt, die durch Umsetzung von (b3) mit (b2) entstehen. In dieser Mischung von Monomeren sind die zuerst genannten, durch Umsetzung von (b1) mit (b2) herstellbaren Comonomeren in einer Menge von 0 bis 15 Mol% enthalten. Die Comonomeren der Gruppe (b) sind zu 1,5 bis 20, vorzugsweise 1,5 bis 10 Mol% in polymerisierter Form im Copolymerisat enthalten.

Als Monomer der Komponente (c) werden monoethylenisch ungesättigte $C_4$- bis $C_6$-Dicarbonsäuren oder deren Anhydride eingesetzt. Bei diesen Verbindungen handelt es sich beispielsweise um Maleinsäure, Itaconsäure, Citraconsäure, Mesaconsäure, Fumarsäure und Methylenmalonsäure sowie die davon bekannten Anhydride. Vorzugsweise kommen Maleinsäure, Itaconsäure, Maleinsäureanhydrid und Itaconsäureanhydrid zur Anwendung. Von besonderem Interesse ist dabei die Verwendung von Anhydriden, weil dadurch Copolymerisate entstehen, die aufgrund ihres Anhydridgruppengehalts weiteren chemischen Reaktionen zugänglich sind. Die Monomeren der Gruppe (c) sind zu 0 bis 80 Mol% in die Copolymerisate einpolymerisiert. Sofern die Monomeren der Gruppe (c) bei der Herstellung von Copolymerisate zum Einsatz gelangen, beträgt die vorzugsweise in Betracht kommende Menge 5 bis 50 Mol%.

Die Copolymerisate können weiterhin gegebenenfalls bis 20 Mol% andere, mit den Monomeren (a), (b) und (c) copolymerisierbaren, monoethylenisch ungesättigten Comonomeren einpolymerisiert enthalten, wobei die Summe der Angaben in Mol% (a) bis (d) jeweils einhundert beträgt. Als gegebenenfalls in Betracht kommende Comonomere eignen sich beispielsweise Hydroxyalkylester mit 2 bis 6 C-Atomen in der Hydroxyalkylgruppe von monoethylenisch ungesättigten $C_3$-$C_6$-Carbonsäuren. Die Hydroxyalkylestergruppen dieser Gruppe von Monomeren leiten sich von mehrwertigen Alkoholen ab, z.B. Glykol, Glycerin, Propandiol-1,2, Propandiol-1,3, Butandiol-1,4, Butandiol-1,3, Butandiol-2,3, Gemische der Butandiole oder Propandiole, Hexandiol-1,6 und Neopentylglykol.

Die mehrwertigen Alkohole werden mit monoethylenisch ungesättigten $C_3$- bis $C_6$-Carbonsäuren verestert. Hierbei handelt es sich um diejenigen Carbonsäuren, die oben unter a) genannt sind. Als Komponente (d) eignen sich somit beispielsweise Hydroxyethylacrylat, Hydroxyethylmethacrylat, Hydroxy-n-propylmethacrylat, Hydroxy-n-propylacrylat, Hydroxyisopropylacrylat, Hydroxyisopropylmethacrylat, Hydroxy-n-butylacrylat, Hydroxyisobutylacrylat, Hydroxy-n-butylmethacrylat, Hydroxyisobutylmethacrylat, Hydroxyethylmonomaleinat, Hydroxyethyldimaleinat, Monohydroxypropylmaleinat, Dihydroxypropylmaleinat, Monohydroxy-n-butylmaleinat, Dihydroxy-n-butylmaleinat und Monohydroxyethylitaconat. Von den Hydroxyalkylestern der monoethylenisch ungesättigten Dicarbonsäuren kommen sowohl die Mono- als auch die Diester der Dicarbonsäuren mit den oben genannten mehrwertigen Alkoholen in Betracht.

Vorzugsweise verwendet man als Komponente (d) Hydroxyethylacrylat, Hydroxyethylmethacrylat, Butan-1,4-diolmonoacrylat und die technischen Gemische von Hydroxypropylacrylaten. Hierbei sind von besonderer technischer Bedeutung die Isomerengemische aus 2-Hydroxy-1-propylacrylat und 1-Hydroxy-2-propylacrylat. Diese Hydroxyalkylacrylate werden durch Umsetzung von Acrylsäure mit Propylenoxid hergestellt.

Geeignete Monomere (d) sind außerdem beispielsweise Acrylamid, Methacrylamid, 2-Acrylamido-2-methylpropansulfonsäure, Vinylsulfonsäure, Allylsulfonsäure, Vinylphosphonsäure, Allylphosphonsäure, Acrylnitril, Methacrylnitril, Dimethylaminoethylacryat, Diethylaminoethylacrylat, Diethylaminoethylmethacrylat, N-Vinylpyrrolidon, N-Vinylformamid, N-Vinylimidazol, N-Vinylimidazolin, 1-Vinyl-2-methyl-2-imidazolin und Vinylacetat sowie Mischungen der genannten Monomeren.

Diejenigen Monomere dieser Gruppe, die Säuregruppen enthalten, werden bei der Copolymerisation vorzugsweise in Form der freien Säuren eingesetzt. Bei der Copolymerisation können sie jedoch auch in partiell neutralisierter Form zur Anwendung gelangen. Die basischen Acrylate, wie Diethylaminoethylacrylat, werden ebenfalls vorzugsweise in der nicht neutralisierten bzw. nicht quaternisierten Form der Copolymerisation unterworfen.

Die Monomeren der Gruppe (d) sind zu 0 bis 20, vorzugsweise 0 bis 15 Mol% in polymerisierter Form im Copolymerisat enthalten. Die Summe der Angaben in Mol% der Komponenten (a) bis (d) beträgt immer einhundert. Die Copolymerisation wird gemäß Erfindung in mindestens einem inerten organischen Lösemittel durchgeführt. Sie kann dabei nach verschiedenen Verfahrensvarianten erfolgen, z.B. kann man die Monomeren (a) bis (d) in Form einer Lösung in einem inerten organischen Lösemittel diskontinuierlich in einer Batch-Fahrweise polymerisieren. Außerdem ist es möglich, zunächst einen Teil der Monomeren und einen Teil des Initiators im Polymerisationsreaktor vorzulegen, unter Inertgasatmosphäre auf die Polymerisationstemperatur zu erwärmen und dann die übrigen Monomeren und den Initiator und gegebenenfalls inertes organisches Lösemittel nach Fortschritt der Polymerisation dem Reaktor zuzugeben. Ebenso ist auch eine kontinuierliche Copolymerisation in einer aus mehreren Reaktoren bestehenden Kaskade möglich. Die Polymerisationstemperaturen liegen in dem Bereich von 20 bis 200, vorzugsweise 40 bis 160° C. Sofern man bei Temperaturen oberhalb des Siedepunkts des jeweils verwendeten inerten Lösemittels oder Lösemittelgemisches arbeitet, benötigt man Druckapparaturen und führt die Copolymerisation dann bei Drücken bis zu 25 bar durch.

In einer bevorzugten Ausführungsform wird zunächst ein spezielles Comonomer (b) hergestellt, in dem man b1) Maleinsäureanhydrid, Itaconsäureanhydrid, Citraconsäureanhydrid oder deren Gemische in einem Reaktor vorlegt und darin mit den oben genannten Verbindungen b2) bei Temperaturen von 50 bis 200° C umsetzt. Diese Umsetzung wird in Abwesenheit von Wasser vorgenommen, geringe Mengen an Wasser stören dabei jedoch dann nicht, wenn die Komponente b1) in entsprechendem Überschuß eingesetzt wird. Anstelle von den unter b1) genannten Verbindungen kann man jedoch auch die sich davon ableitenden

5

Mono- oder Diester mit $C_1$- bis $C_4$-Alkoholen einsetzen. In diesen Fällen wird eine Umesterung durchgeführt und vorzugsweise der dabei entstehende $C_1$- bis $C_4$-Alkohol aus dem Reaktionsgemisch abdestilliert. Falls bei der Herstellung der Comonomeren b) Ester der Komponente b1) eingesetzt werden, so sind dies vorzugsweise Maleinsäuredimethylester, Maleinsäuremonomethylester, Itaconsäuredimethylester, Maleinsäuremonoisopropylester und Maleinsäurediisopropylester. Gegebenenfalls können übliche Veresterungskatalysatoren mitverwendet werden.

Pro Mol der Verbindungen b2) setzt man mindestens 0,5 Mol einer Verbindung der Komponente (b1) ein. Die Temperatur bei der Umsetzung beträgt vorzugsweise 50 bis 150° C. Die Reaktion wird soweit geführt, daß praktisch ein quantitativer Umsatz der Komponente (b2) gegeben ist. Die üblicherweise in einem Überschuß verwendete Komponente (b1) kann nach Beendigung der Comonomerherstellung im Reaktionsgemisch verbleiben. Das Comonomer kann in diesem Fall in einer monoethylenisch ungesättigten $C_3$- bis $C_6$-Monocarbonsäure gemäß a) gelöst werden und dann zusammen mit dem nicht umgesetzten Teil der Komponente (b1) und den übrigen Monomeren der Copolymerisation unterworfen werden. Der nicht umgesetzte Teil der Komponente (b1) ist dann als Komponente (c) der Monomermischung aufzufassen.

Als Polymerisationsinitiatoren werden Radikale bildende Verbindungen eingesetzt, z.B. Peroxide, Hydroperoxide, Peroxidisulfate, Redoxinitiatoren und Azostarter.

Die Initiatoren sollen vorzugsweise bei den gewählten Polymerisationstemperaturen eine Halbwertszeit von <3 Std. besitzen. Wird beispielsweise bei niedriger Temperatur anpolymerisiert und bei höherer Temperatur auspolymerisiert, so empfiehlt es sich, mit mindestens 2 Initiatoren zu arbeiten. Beispielsweise sind für die genannten Polymerisationstemperaturen folgende Initiatoren geeignet:

Temp.: 50 bis 60° C:

Acetylcyclohexansulfonylperoxid, Dicetylperoxydicarbonat, Dicyclohexylperoxidicarbonat, Di-2-ethylhexylperoxydicarbonat, tert.-Butylperneodecanoat, 2,2'-Azobis-(4-methoxi-2,4-dimethylvaleronitril)

Temp.: 70 bis 80° C:

tert.-Butylperpivalat, Dioctanoylperoxid, Dilauroylperoxid, 2,2'-Azobis-(2,4-dimethylvaleronitril)

Temp.: 90 bis 100° C:

tert.-Butyl-per-2-ethylhexanoat

Temp.: 110 bis 120° C:

Bis-(tert.-butylperoxi)-cyclohexan, tert.-Butylperoxiisopropylcarbonat, tert.-Butylperacetat

Temp.: 130 bis 140° C:

2,2-Bis-(tert.-butylperoxi)-butan, Dicumylperoxid, Di-tert.-amylperoxid, Di-tert.-butylperoxid

Temp.: 150° C:

p-Menthanhydroperoxid, Pinanhydroperoxid, Cumolhydroperoxid, tert.-Butylhydroperoxid.

Durch die Mitverwendung von Redox-Coinitiatoren, wie beispielsweise Benzoin, Dimethylanilin sowie organisch lösliche Komplexe und Salze von Schwermetallen wie Kupfer, Kobalt, Mangan, Eisen, Nickel, Chrom können die Halbwertszeiten der genannten Peroxide, besonders der Hydroperoxide verringert werden, so daß beispielsweise tert.-Butylhydroperoxid in Gegenwart von 5 ppm Kupfer-II-Acetylacetonat bereits bei 100° C wirksam ist.

Für die Polymerisation geeignete Apparaturen sind übliche Rührkessel mit Anker-, Blatt-, Impeller- oder Mehrstufenimpulsgegenstromrührer. Besonders geeignet sind Apparaturen, die im Anschluß an die Polymerisation die direkte Isolierung des Festproduktes gestatten, wie z.B. Schaufeltrockner.

Die Initiatoren werden in Mengen von 0,1 bis 15, vorzugsweise 0,5 bis 10 Gew.%, bezogen auf die Summe der bei der Polymerisation eingesetzten Monomeren angewendet. Die Polymerisationsinitiatoren können entweder zusammen mit den Monomeren oder getrennt davon als Lösung in einem inerten organischen Lösemittel kontinuierlich oder absatzweise zu der zu polymerisierenden Mischung zugegeben werden.

Die Copolymerisation wird in Gegenwart von Reglern durchgeführt. Geeignete Regler sind beispielsweise $C_1$- bis $C_4$-Aldehyde, z.B. Formaldehyd, Acetaldehyd, Isobutylaldehyd, n-Butylaldehyd und Acrolein, Ameisensäure, Ammoniumformat, Hydroxylammoniumsalze, insbesondere Hydroxylammoniumsulfat, SH-Gruppen enthaltende Verbindungen mit bis zu 20 Kohlenstoffatomen, wie Thioglykolsäure, Mercaptoalkohole, wie Mercaptoethanol, Mercaptopropanol, Mercaptobutanole und Mercaptohexanol, Thioglycerin, $C_4$-bis $C_{20}$-Alkylmercaptane, Mercaptomilchsäure, Mercaptobernsteinsäure und Cystein. Sofern derartige hochwirksame Regler zum Einsatz gelangen, werden diese in Mengen von 0.2 bis 25 Gew.%, bevorzugt 0.5 bis 15 Gew.%, bezogen auf die Monomeren, bei der Colpolymerisation eingesetzt. Die Funktion des Reglers kann aber auch von einem regelnd wirkenden Lösemittel wahrgenommen werden. Stark regelnde Lösemittel sind z.B. Dioxan, Tetrahydrofuran und sekundäre Alkohole, wie Isopropanol, sec. Butanol und Glycerin. Diese können entweder alleinige Lösungsmittel sein oder in Mengen von mindestens 20 Gew.%, bezogen auf die Monomeren, bei der Copolymerisation zugesetzt werden. Es ist selbstverständlich auch nicht möglich, Mischungen von Reglern bei der Copolymerisation zu verwenden, z.B. Mischungen aus Dioxan oder Tetrahydrofuran oder Isopropanol mit jeweils mindestens einem der vorstehend genannten hochwirksamen Regler, wie Mercaptoethanol oder Thioglykolsäure.

Die Copolymerisation kann beispielsweise als Fällungspolymerisation in $C_1$- bis $C_3$-Alkylbenzolen, aliphatischen, acyclischen $C_4$- bis $C_8$-Ketonen, chlorierten $C_1$- bis $C_4$-Alkanen oder deren Mischungen durchgeführt werden. Im einzelnen eignen sich folgende inerte organische Lösemittel für die Fällungspolymerisation: Benzol, Toluol, p-Xylol, m-Xylol, o-Xylol sowie deren technische Gemische, Ethylbenzol, Diethylbenzol, Methylethylbenzol, Methylenchlorid, 1,2-Dichlorethan, 1,1-Dichlorethan, 1,1,1-Trichlorethan, 1,1,2-Trichlorethan, Perchlorethylen, 1,2-Dichlorpropan, Butylchlorid, Fluorkohlenwasserstoffe, 2-Butanon, 3-Pentanon sowie 3-Hexanon.

Die Copolymerisation kann ebenso auch als Lösungspolymerisation in mindestens einem Ether, wie Dioxan, Tetrahydrofuran, Ethylenglykoldimethylether, Ethylenglykoldiethylether und Diethylenglykoldimethylether durchgeführt werden, sowie in Aceton, Methylethylketon, Cyclohexanon, Methylglykolacetat, Ethylglykolacetat sowie einwertigen $C_1$- bis $C_4$-Alkoholen, wie Methanol, Ethanol, Isopropanol, n-Butanol, sekundär-Butanol und tertiär-Butanol sowie Ethylenglykol. Falls man als Monomer der Komponente (c) die Anhydride von Dicarbonsäuren einsetzt, wird die Copolymerisation vorzugsweise in Abwesenheit von Alkoholen durchgeführt, so daß Copolymerisate mit Anhydridgruppen entstehen, die weiteren chemischen Umsetzungen zugänglich sind.

Die Copolymerisation kann ebenso gut auch als Suspensions-Polymerisation in mindestens einem aliphatischen Kohlenwasserstoff vorgenommen werden. Geeignete aliphatische Kohlenwasserstoffe als inertes Lösemittel bzw. Verdünnungsmittel für die Copolymerisation sind beispielsweise Pentan, Hexan, Heptan, Octan, Isooctan, Cyclohexan, Methylcyclohexan, Dimethylcyclohexan, Ethylcyclohexan, Diethylcyclohexan und deren Gemische. Von den in Betracht kommenden aliphatischen Kohlenwasserstoffen können sämtliche Isomeren oder Mischungen davon eingesetzt werden.

Bei der Fällungs- und Suspensionspolymerisation ist es vorteilhaft, zusätzlich in Gegenwart von Schutzkolloiden zu polymerisieren. Geeignete Schutzkolloide hierfür sind beispielsweise Copolymerisate aus Maleinsäureanhydrid mit Vinylalkylethern, die 1 bis 20 Kohlenstoffatome in der Alkylgruppe enthalten, oder Copolymerisate aus Maleinsäureanhydrid und Olefinen mit 8 bis 20 Kohlenstoffatomen sowie deren Monoester mit $C_{10}$- bis $C_{20}$-Alkoholen oder Monoamide mit $C_{10}$- bis $C_{20}$-Aminen. Außerdem eignen sich Polyalkylvinylether, deren Alkylgruppe 1 bis 20 Kohlenstoffatome enthält, z.B. Polymethyl-, Polyethyl- und Polyisobutylvinylether. Falls bei der Copolymerisation ein Schutzkolloid eingesetzt wird, so betragen die wirksamen Mengen 0,05 bis 4 Gew.%, bezogen auf die zu polymerisierenden Monomeren.

Vorzugsweise unterwirft man Monomermischungen aus

a) 98,5 Mol% bis 35% Mol% Acrylsäure oder Methacrylsäure,

b) 1,5 bis 15 Mol% eines Diacrylats oder Dimethacrylats von Butandiol-1,4, Polypropylenglykolen eines Molekulargewichts von 134 bis 1016, Polyethylenglykolen eines Molekulargewichts von 106 bis ca. 6 000 (d.h. 2 bis 140 Ethylenoxideinheiten enthaltende Polyethylenglykole), Trimethylolpropantriacrylat oder Trimethylolpropantrimethacrylat und

c) 0 bis 50 Mol% Maleinsäureanhydrid

in Tetrahydrofuran, Dioxan oder deren Mischungen der Copolymerisation.

In dieser bevorzugten Ausführungsform des Verfahrens kann man als Comonomer (b) Bis-Maleinsäurehalbester einsetzen, die durch Umsetzung von Maleinsäureanhydrid mit Ethylenglykol, Polyethylenglykol eines Molekulargewichts bis ca. 6 000, Neopentylglykol und Butandiol-1,4 im Molverhältnis 2:1 erhältlich sind.

Bei der Copolymerisation werden entweder Polymerisatlösungen in einem inerten organischen Lösemit-

7

tel erhalten, die einen Polymerisatgehalt bis zu 70 Gew.% aufweisen oder es entstehen Polymerisat-Suspensionen. Die Copolymerisation der Monomeren (a) bis (d) kann auch in sehr verdünnter organischer Lösung durchgeführt werden, z.B. bei einem Gehalt an Monomeren von insgesamt 1 Gew.%, jedoch führt man die Copolymerisation aus wirtschaftlichen Erwägungen in der Weise durch, daß man mindestens 20 gew.%ige Lösungen oder Polymerisat-Suspensionen erhält. Die Copolymerisate können aus den Lösungen bzw. Suspensionen durch Entfernen der Lösemittel direkt isoliert werden. Sofern man die Copolymerisation nach Art einer Suspensions- bzw. Fällungspolymerisation durchgeführt hat, kann man die Copolymerisate aus den erhaltenen Reaktionsgemischen abfiltrieren oder abzentrifugieren. Auch läßt sich der Reaktionsansatz mit Wasser oder wäßrigem Alkali extrahieren. Sofern man sich des Verfahrens der Lösungspolymerisation bedient hat, wird das inerte organische Lösemittel abdestilliert oder durch Überführung in das Alkali-, Ammonium- oder Erdalkalisalz ausgefällt. Die erhaltenen Copolymerisate sind zumindest in der Salzform, d.h. als Alkali-, Ammonium- oder Calciumsalz, in Wasser löslich. Gegenüber den in wäßriger Lösung hergestellten Copolymerisaten gleicher Zusammensetzung weisen die in einem organischen Lösemittel hergestellten Copolymerisate ein verbessertes Calciumcarbonat-Dispergiervermögen auf. Die Copolymerisate haben außerdem die Eigenschaft, daß sie bei niedrigen Polymerkonzentrationen kaum Ausfällungen mit Calciumionen bilden. Die so erhältlichen Copolymerisate sind außerdem biologisch abbaubar. Sie haben einen K-Wert in dem Bereich von 8 bis 100, vorzugsweise 10 bis 70. Die K-Werte der Copolymerisate werden jeweils am Natriumsalz in wäßriger Lösung bei 25 °C, einem pH-Wert von 7 und einer Polymerkonzentration des Natriumsalzes des Copolymerisats von 1 Gew.% bestimmt. Sofern die Copolymerisate in Form anderer Salze oder freier Säuren vorliegen, müssen sie vor der Bestimmung des K-Wertes zunächst in die Natriumsalze umgewandelt werden. Falls sich die Copolymerisate in der freien Säureform nicht in Wasser lösen, so gelingt es, sie durch partielle oder vollständige Neutralisation mit Natronlauge, Kalilauge, Ammoniak oder Aminen in eine wasserlösliche Form zu überführen. Copolymerisate, deren Alkali- oder Ammoniumsalze, von denen sich mindestens 20 g/l Wasser bei einer Temperatur von 20 °C lösen, werden im vorliegenden Zusammenhang als wasserlöslich bezeichnet.

Die oben beschriebenen Copolymerisate werden als Zusatz zu Wasch- und Reinigungsmitteln verwendet. Sie können dabei pulverförmigen oder auch flüssigen Formulierungen zugesetzt werden. Die Wasch- und Reinigungsmittelformulierungen basieren üblicherweise auf Tensiden und gegebenenfalls Buildern. Bei reinen Flüssigwaschmitteln wird meist auf den Einsatz von Buildern verzichtet. Als Tenside eignen sich beispielsweise anionische Tenside, wie $C_8$- bis $C_{12}$-Alkylbenzolsulfonate, $C_{12}$- bis $C_{16}$-Alkansulfonate, $C_{12}$- bis $C_{16}$-Alkylsulfate, $C_{12}$- bis $C_{16}$-Alkylsulfosuccinate und sulfatierte ethoxylierte $C_{12}$- bis $C_{16}$-Alkanole, ferner nichtionische Tenside, wie $C_8$- bis $C_{12}$-Alkylphenolethoxylate, $C_{12}$-$C_{20}$-Alkanolalkoxylate, sowie Blockcopolymerisate des Ethylenoxids und Propylenoxids. Die Endgruppen der Polyalkylenoxide können gegebenenfalls verschlossen sein. Hierunter soll verstanden werden, daß die freien OH-Gruppen der Polyalkylenoxide verethert, verestert, acetalisiert und/oder aminiert sein können. Eine weitere Modifizierungsmöglichkeit besteht darin, daß man die freien OH-Gruppen der Polyalkylenoxide mit Isocyanaten umsetzt.

Zu den nichtionischen Tensiden zählen auch $C_4$- bis $C_{18}$-Alkylglucoside sowie die daraus durch Alkoxylierung erhältlichen alkoxilierten Produkte, insbesondere diejenigen, die durch Umsetzung von Alkylglucosiden mit Ethylenoxid herstellbar sind. Die in Waschmitteln einsetzbaren Tenside können auch zwitterionischen Charakter haben sowie Seifen darstellen. Die Tenside sind im allgemeinen in einer Menge von 2 bis 50, vorzugsweise 5 bis 45 Gew.% am Aufbau der Wasch- und Reinigungsmittel beteiligt.

In den Wasch- und Reinigungsmitteln enthaltene Builder sind beispielsweise Phosphate, z.B. ortho-Phosphat, Pyrophosphat und vor allem Pentanatriumtriphosphat, Zeolithe, Soda, Polycarbonsäuren, Nitrilotriessigsäure, Zitronensäure, Weinsäure, die Salze der genannten Säuren sowie monomere, oligomere oder polymere Phosphonate. Die einzelnen Stoffe werden in unterschiedlichen Mengen zur Herstellung der Waschmittelformulierungen eingesetzt, z.B. Soda in Mengen bis zu 80 %, Phosphate in Mengen bis zu 45 %, Zeolithe in Mengen bis zu 40 %, Nitrilotriessigsäure und Phosphonate in Mengen bis zu 10 % und Polycarbonsäuren in Mengen bis zu 20 %, jeweils bezogen auf das Gewicht der Stoffe sowie auf die gesamte Waschmittelformulierung. Wegen der starken Umweltbelastungen, die der Einsatz von Phosphaten mit sich bringt, wird der Gehalt an Phosphaten in Wasch- und Reinigungsmitteln in zunehmendem Maße erniedrigt, so daß Waschmittel heute bis höchstens 25 % Phosphat enthalten oder sogar vorzugsweise phosphatfrei sind.

Die Copolymerisate können auch als Zusatz zu Flüssigwaschmitteln verwendet werden. Flüssigwaschmittel enthalten üblicherweise als Abmischkomponente flüssige oder auch feste Tenside, die in der Waschmittelformulierung löslich oder zumindest dispergierbar sind. Als Tenside kommen hierfür die Produkte in Betracht, die auch in pulverförmigen Waschmitteln eingesetzt werden sowie flüssige Polyalkylenoxide bzw. polyalkoxylierte Verbindungen.

8

Waschmittelformulierungen können außerdem als weitere Zusätze Korrosionsinhibitoren, wie Silikate, enthalten. Geeignete Silikate sind beispielsweise Natriumsilikat, Natriumdisilikat und Natriummetasilikat. Die Korrosionsinhibitoren können in Mengen bis zu 25 Gew.% in der Wasch- und Reinigungsmittelformulierung enthalten sein. Weitere übliche Zusätze zu Wasch- und Reinigungsmitteln sind Bleichmittel, die in einer Menge bis zu 30 Gew.% darin enthalten sein können. Geeignete Bleichmittel sind beispielsweise Perborate oder chlorabgebende Verbindungen, wie Chlorisocyanurate. Eine andere Gruppe von Additiven, die gegebenenfalls in Waschmitteln enthalten sein kann, sind Vergrauungsinhibitoren. Bekannte Stoffe dieser Art sind Carboxymethylcellulose, Methylcellulose, Hydroxypropylmethylcellulose und Pfropfpolymerisate von Vinylacetat auf Polyalkylenoxide eines Molekulargewichts von 1 000 bis 15 000. Vergrauungsinhibitoren können in Mengen bis zu 5 % in der Waschmittelformulierung enthalten sein. Weitere übliche Zusatzstoffe zu Waschmitteln, die gegebenenfalls darin enthalten sein können, sind optische Aufheller, Enzyme und Parfüm. Die pulverförmigen Waschmittel können außerdem noch bis zu 50 Gew.% eines Stellmittels, wie Natriumsulfat, enthalten. Die Waschmittelformulierungen können wasserfrei sein bzw. geringe Mengen, z.B. bis zu 10 Gew.% Wasser enthalten. Flüssigwaschmittel enthalten üblicherweise bis zu 80 Gew.% Wasser. Übliche Waschmittelformulierungen sind beispielsweise detailliert in der DE-OS 35 14 364 beschrieben, auf die ausdrücklich hingewiesen wird.

Die oben beschriebenen Copolymerisate können sämtlichen Wasch- und Reinigungsmittelformulierungen zugesetzt werden. Die dafür angewendeten Mengen liegen zwischen 0,5 und 25, vorzugsweise zwischen 1 bis 15 Gew.%, bezogen auf die gesamte Formulierung. Die zur Anwendung gelangenden Mengen an Copolymerisaten betragen in den allermeisten Fällen vorzugsweise 2 bis 10 Gew.%, bezogen auf die Wasch- und Reinigungsmittelmischung. Von besonderer Bedeutung ist der Einsatz der erfindungsgemäß zu verwendenden Additive in phosphatfreien und phosphatarmen Wasch- und Reinigungsmitteln. Die phosphatarmen Formulierungen enthalten bis höchstens 25 Gew.% Pentanatriumtriphosphat oder Pyrophosphat. Die Copolymerisate werden vorzugsweise in phosphatfreien Formulierungen eingesetzt.

Falls gewünscht, können die erfindungsgemäß zu verwendenden Copolymerisate zusammen mit bekannten Copolymerisaten aus Acrylsäure und Maleinsäure bzw. Homopolymerisaten aus Acrylsäure in Waschmittelformulierungen eingesetzt werden. Die zuletzt genannten Polymerisate sind bisher als Inkrustierungsinhibitoren in Waschmittelformulierungen verwendet worden. Außer den bereits genannten Polymerisaten kommen auch Copolymerisate aus $C_3$- bis $C_6$-Mono- und Dicarbonsäuren oder Maleinsäureanhydrid und $C_1$- bis $C_4$-Alkylvinylethern in Betracht. Das Molekulargewicht der Homo- und Copolymerisate beträgt 1000 bis 100 000. Falls gewünscht, können diese Inkrustierungsinhibitoren in einer Menge bis zu 10 Gew.%, bezogen auf die gesamte Formulierung, neben den erfindungsgemäß zu verwendenden Copolymerisaten in Waschmitteln eingesetzt werden.

Die Copolymerisate können sowohl in Form der freien Säuren, in vollständig neutralisierter Form oder in partiell neutralisierter Form zu Waschmittelformulierungen zugesetzt werden.

Die in den Beispielen angegebenen K-Werte wurden nach H. Fikentscher, Cellulosechemie, Band 13, 58-64 und 71-74 (1932) bestimmt. Dabei bedeutet $K = k \cdot 10^3$. Die Messungen wurden in allen Fällen am Natriumsalz in wäßriger Lösung bei 25° C, einem pH-Wert von 7 und einer Polymerkonzentration des Natriumsalzes von 1 Gew.% vorgenommen.

Beispiel 1

In einem mit Stickstoff gespülten und mit einem Rührer versehenen Reaktor aus Glas werden 98 g Maleinsäureanhydrid in 400 ml Dioxan auf 100° C erhitzt und gleich beginnend innerhalb von 2 Stunden 90 g Acrylsäure, 29,7 g 1,4-Butandioldimethacrylat, das in 50 ml Dioxan gelöst ist, sowie 2,16 g tert.-Butyl-per-2-ethylhexanoat, das in 50 ml Dioxan gelöst ist, zugetropft. Das Reaktionsgemisch wird dann 3 Stunden bei 100° C gerührt, danach abgekühlt und mit 800 ml Wasser verdünnt. Die Lösung wird durch Zugabe von 50%iger wäßriger Natronlauge auf einen pH-Wert von 6,5 eingestellt, wobei man die Temperatur unterhalb von 30° C hält. Nach der Neutralisation liegt ein zweiphasiges Gemisch vor. Die untere Phase des Gemisches wird abgetrennt, in 550 ml Wasser gelöst und durch Zugabe von 4 000 ml einer 1:1-Mischung aus Methanol und Aceton gefällt. Das ausgefällte Copolymerisat wird im Vakuum bei 75° C getrocknet. Man erhält ein Copolymerisat mit einem K-Wert von 44,2. Es hat einen Restgehalt an Maleinsäure von 0,9%.

Beispiel 2

Das Beispiel 1 wird mit der Ausnahme wiederholt, daß man anstelle der dort angegebenen Menge 1,4-Butandioldimethacrylat jetzt 37,5 g Tripropylenglykoldiacrylat einsetzt. Man erhält ein Copolymerisat mit einem K-Wert von 69,2. Das Copolymerisat hat einen Maleinsäurerestgehalt von 0,5%.

Beispiel 3

In einem mit Stickstoff gespülten Reaktor werden unter Rühren 98 g Maleinsäure in 400 ml Dioxan auf eine Temperatur von 100°C erhitzt. Sobald die Lösung die genannte Temperatur erreicht hat, wird gleich beginnend eine Mischung aus 99 g Acrylsäure mit 12,4 g Trimethylolpropantriacrylat sowie getrennt davon eine Lösung von 2,1 g Mercaptoethanol in 50 g Dioxan innerhalb von 2 Stunden und eine Lösung von 2,1 g tert.-Butyl-per-2-ethylhexanoat in 50 ml Dioxan innerhalb von 2,5 Stunden zugetropft. Die Aufarbeitung des Reaktionsgemisches erfolgt wie in Beispiel 1 beschrieben. Man erhält ein Copolymerisat mit einem K-Wert von 30. Es hat einen Restgehalt an Maleinsäure von 0,8%.

Beispiel 4

Beispiel 3 wird mit den Ausnahmen wiederholt, daß man anstelle der in Beispiel 3 eingesetzten Monomeren jetzt 49 g Maleinsäureanhydrid, 136,8 g Acrylsäure und 27,3 g des Diacrylsäureesters von Polypropylenglykol des Molekulargewichts 420 einsetzt. Man erhält ein Copolymerisat mit einem K-Wert von 59,8. Es hat einen restlichen Maleinsäuregehalt von 0,2%.

Beispiel 5

Beispiel 3 wird mit den Ausnahmen wiederholt, daß man anstelle der dort eingesetzten Monomeren jetzt 49 g Maleinsäureanhydrid, 133,2 g Acrylsäure und 41,0 g des Diacrylsäureesters von Polypropylenglykol eines Molekulargewichts von 420 einsetzt und 11,2 g Thioglykolsäure als Regler verwendet. Man erhält auf diese Weise ein Copolymerisat mit einem K-Wert von 26,1 und einem Maleinsäurerestgehalt von 0,4%.

Beispiel 6

Beispiel 3 wird mit den Ausnahmen wiederholt, daß man anstelle der darin eingesetzten Monomeren nunmehr 49 g Maleinsäureanhydrid, 118,6 g Acrylsäure und 95,6 g des Diacrylats von Polypropylenglykol eines Molekulargwichts von 420 in Gegenwart von 26,3 g Thioglykolsäure als Regler copolymerisiert. Man erhält ein Copolymerisat mit einem K-Wert von 39,8 und einem Restgehalt an Maleinsäure von 0,7%.

Beispiel 7

In einem mit Stickstoff gespülten und mit einem Rührer versehenen Reaktor aus Glas werden 210 g Dioxan vorgelegt, unter Rühren auf 80°C erwärmt und innerhalb von 4 Stunden eine Lösung aus 98 g Acrylsäure und 21,7 g Tetraethylenglykol sowie eine Lösung von 12 g Thioglykolsäure in 50 g Dioxan zugetropft. Gleichzeitig mit der Zugabe der Monomeren aber getrennt davon und innerhalb von 4 1/2 Stunden wird eine Lösung von 2,63 g 2,2-Azobis(2,4-dimethyl)valeronitril im 50 ml Dioxan zudosiert. Das Reaktionsgemisch wird nach Beendigung der Initiatorzugabe noch eine Stunde bei 80°C gerührt und dann auf Raumtemperatur abgekühlt. Zur Aufarbeitung verdünnt man das Reaktionsgemisch mit 625 ml Wasser und fügt soviel einer 50%igen wäßrigen Natronlauge zu, bis der pH-Wert 6,5 beträgt. Das Polynatriumsalz des Copolymerisates wird durch Zugabe von 3 l eines 1:1-Gemisches aus Ethanol und Aceton gefällt, abfiltriert und bei 75°C im Vakuum getrocknet. Das Copolymerisat hat einen K-Wert von 20,9.

Beispiel 8

Man verfährt wie im Beispiel 7 angegeben, verwendet jedoch Tetrahydrofuran als Lösemittel und copolymerisiert anstelle der dort angegebenen Monomeren 100,9 g Acrylsäure mit 14,9 g Tripropylenglykoldiacrylat bei 65°C in Gegenwart von 11,6 g Thioglykolsäure als Regler und 2,55 g 2,2-Azobis(2,4-dimethyl)valeronitril als Initiator. Man erhält ein Copolymerist mit einem K-Wert von 17.

Beispiel 9

Man verfährt analog Beispiel 7, setzt jedoch Tetrahydrofuran als Lösemittel ein und als Monomergemisch 96,7 g Acrylsäure und 15,5 g Trimethylolpropantriacrylat. Die Copolymerisation wird bei 65°C in Gegenwart von 11,2 g Thioglykolsäure als Regler und 2,47 g 2,2-Azobis(2,4-dimethyl)valeronitril als Initiator durchgeführt. Man erhält ein Copolymerisat mit einem K-Wert von 18,6.

Beispiel 10

In einem mit Stickstoff gespülten Glasreaktor werden zu einer Mischung von 98 g Maleinsäureanhydrid, 4,1 g Acrylsäure, 0,83 g Thioglykolsäure und 185 g Cyclohexanon bei 140°C innerhalb von 3 Stunden Lösungen von 76,9 g Acrylsäure, 56,3 g Tripropylenglykoldiacrylat in 100 g Cyclohexanon sowie von 15,8 g Thioglykolsäure in 200 g Cyclohexanon zudosiert. Gleich beginnend mit diesen beiden Zuläufen wird innerhalb von 3,5 Stunden eine Lösung von 1,93 g tert.-Butylperbenzoat zugetropft. Das Reaktionsgemisch wird nach Beendigung der Initiatorzugabe noch 2 Stunden nachpolymerisiert und dann wie im Beispiel 1 beschrieben aufgearbeitet. Man erhält ein Copolymerisat mit einem K-Wert von 18,6 und einem Restmaleinsäuregehalt von 0,8%.

Beispiel 11

In einem mit Stickstoff gespülten Reaktor aus Glas, der mit einem Rührer versehen ist, werden 49 g Maleinsäureanhydrid, 6,3 g Acrylsäure, 1,1 g Thioglykolsäure und 1,1 g Polyethylvinylether mit einem K-Wert von 50 (bestimmt bei 25°C als 1%ige Lösung in Cyclohexan) in 445 g Diethylketon vorgelegt und unter Rühren auf eine Temperatur von 100°C erwärmt. Zu der so erhaltenen Lösung werden dann innerhalb von 3 Stunden getrennt voneinander Lösungen aus 120 g Acrylsäure und 37,5 g Tripropylenglykoldiacrylat sowie aus 20,2 g Thioglykolsäure in 50 g Diethylketon zudosiert. Gleich beginnend mit diesen beiden Zuläufen tropft man innerhalb von 3,5 Stunden 2,13 g tert.-Butyl-per-2-ethylhexanoat zu, das in 50 g Diethylketon gelöst ist. Man erhält eine grobteilige farblose Suspension. Das Reaktionsgemisch wird noch 2 Stunden nach Beendigung der Initiatorzugabe bei 100°C gerührt, anschließend abgekühlt und das überstehende Lösemittel abdekantiert. Das Festprodukt wird nach dem Waschen mit kaltem Diethylketon bei 75°C im Vakuum getrocknet. Zur Herstellung des Natriumsalzes des Copolymerisates werden 75 g des festen Produktes in 350 ml Wasser gelöst und mit 50%iger wäßriger Natronlauge auf einen pH-Wert von 6,5 eingestellt. Das Natriumsalz des Copolymerisates hat einen K-Wert von 22,2 und einen Restmaleinsäuregehalt von 0,4%.

Beispiel 12

Analog Beispiel 11 werden 49 g Maleinsäureanhydrid, 117 g Acrylsäure und 56,3 g Tripropylenglykoldiacrylat in Diethylglykol in Gegenwart von 22,2 g Thioglykolsäure als Regler und 2,22 g tert.-Butyl-per-2-ethylhexanonat als Initiator copolymerisiert. Man erhält ein Copolymerisat mit einem K-Wert von 27,9. Es hat einen Restmaleinsäuregehalt von 0,2%.

Beispiel 13

Man verfährt analog Beispiel 11, polymerisiert jedoch in Abweichung von dem genannten Beispiel in Toluol 49 g Maleinsäureanhydrid, 126 g Acryl säure und 37,5 g Tripropylenglykoldiacrylat bei 100°C in Gegenwart von 17,1 g Thioglykolsäure als Regler und 2,13 g tert.-Butyl-per-2-ethylhexanoat als Initiator. Man erhält ein Copoymerisat mit einem K-Wert von 22,0 und einem Restgehalt an Maleinsäure von 0,1%.

Beispiel 14

11

In einem mit einem Rührer ausgestatteten Glasreaktor, der laufend mit Stickstoff gespült wird, legt man 308 g Toluol und 1,6 g Polyethylvinylether vom K-Wert 50 (bestimmt bei 25°C als 1%ige Lösung in Cyclohexan) als Schutzkolloid vor, erwärmt die Mischung auf 75°C und fügt innerhalb von 4 Stunden kontinuierlich, getrennt voneinander, eine Lösung aus 129,6 g Acrylsäure und 30 g Tripropylenglykoldiacrylat sowie eine Lösung aus 12,77 g Thioglykolsäure in 50 ml Toluol zu. Gleich beginnend mit den beiden genannten Zuläufen wird innerhalb von 4,5 Stunden eine Lösung von 1,6 g tertiär-Butyl-per-2-ethylhexanoat in 50 g Toluol zugetropft. Während der Copolymerisation bei 75°C entsteht eine feinteilige Suspension. Nach Beendigung der Initiatorzugabe wird das Reaktionsgemisch noch eine Stunde bei einer Temperatur von 100°C gerührt, danach abgekühlt und nach dem Sedimentieren das Lösungsmittel dekantiert. Das dabei erhaltene feinteilige Copolymerisat wird mit Toluol gewaschen und bei 75°C im Vakuum getrocknet. Zur Herstellung des Natriumsalzes des Copolymerisates verfährt man wie im Beispiel 11 angegeben. Das Copolymerisat hat einen K-Wert von 25,5 und einen Maleinsäurerestgehalt von 0,1%.

Beispiel 15

In einem mit einem Rührer versehenen Reaktor werden unter einer Stickstoffatmosphäre 350 g Isopropanol vorgelegt und unter Rühren auf eine Temperatur von 75°C erwärmt. Sobald diese Temperatur erreicht ist, gibt man innerhalb von 4 Stunden eine Lösung aus 121 g Acrylsäure und 48,3 g Tetraethylenglykoldiacrylat sowie gleich beginnend damit, jedoch innerhalb eines Zeitraumes von 4,5 Stunden eine Lösung aus 3,39 g 2,2-Azobis(2,4-dimethyl)valeronitril in 50 ml Isopropanol zu. Das Reaktionsgemisch wird 2 Stunden bei 75°C nachpolymerisiert und dann wie im Beispiel 7 beschrieben, aufgearbeitet. Man erhält ein Copolymerisat mit einem K-Wert von 26,9.

Beispiele 16-20

In einem 1 l fassenden Glasreaktor, der mit Rührer, Thermometer, Kühler, Stickstoffeinleitung und 2 Zulaufgefäßen ausgestattet ist, werden 98 g (1 Mol) Maleinsäureanhydrid und 0,15 Mol des in Tabelle 1 jeweils angegebenen mehrwertigen Alkohols in 200 ml Dioxan bis zur vollständigen Veresterung des mehrwertigen Alkohols unter Stickstoffspülung am Rückfluß gekocht. Zu dieser Lösung werden dann gleich beginnend über einen Zeitraum von 3 Stunden 108 g (1,5 Mol) Acrylsäure und eine Lösung von 2,5 g tert.-Butyl-per-2-ethylhexanoat in 150 ml Dioxan zugetropft. Nach Beendigung der Zugabe wird das Reaktionsgemisch nach 2 Stunden bei 100°C nachpolymerisiert, dann abgekühlt und durch Zugabe von 50%iger wäßriger Natronlauge auf einen pH-Wert von 7 eingestellt. Bei der Neutralisation soll eine Temperatur von 25°C nicht überschritten werden. Die Aufarbeitung des Reaktionsgemisches erfolgt analog Beispiel 1. Die eingesetzten mehrwertigen Alkohole, der Restmaleinsäuregehalt der Copolymerisate und die K-Werte der Copolymerisate sind in Tabelle 1 angegeben.

Tabelle 1

| Beisp. Nr. | mehrwertiger Alkohol | Restgehalt an Maleinsäure | K-Wert des Copolymerisats |
|---|---|---|---|
| 16 | Ethylenglykol | 0,2 % | 45,2 |
| 17 | Neopentylglycol | 0,9 % | 38,9 |
| 18 | Diethylenglycol | 0,3 % | 47,4 |
| 19 | Polyethylenglycol | 0,4 % | 54,0 |
| 20 | Butandiol-1,4 | 0,3 % | 42,1 |

Beispiele 21-23

In einem 1 l fassenden Glasreaktor, der mit Rührer, Thermometer, Kühler, Stickstoffeinleitung und 3 Zulaufgefäßen ausgestattet ist, werden jeweils 0,1 Mol des in Tabelle 2 angegebenen Dimaleinats in 250 ml Dioxan vorgelegt. Die Lösung wird sorgfältig mit Stickstoff gespült und unter Rühren auf eine Temperatur von 80°C erwärmt. Unter ständigem Rühren werden dann innerhalb von 4 Stunden 94 g (1,3 Mol) Acrylsäure sowie eine Lösung von 10 g Thioglykolsäure in 50 ml Dioxan zugetropft. Gleich beginnend mit den genannten Zuläufen wird innerhalb von 5 Stunden eine Lösung von 3 g 2,2-Azobis(2,4-dimethyl)-valeronitril in 50 ml Dioxan zudosiert. Nach Beendigung der Initiatorzugabe wird das Reaktionsgemisch noch eine Stunde bei 80°C nachpolymerisiert und analog Beispiel 7 aufgearbeitet. Die jeweils eingesetzten Dimaleinate und K-Werte der Copolymerisate sind in Tabelle 2 angegeben.

Tabelle 2

| Beispiel Nr. | Dimaleinat | K-Wert |
|---|---|---|
| 21 | Ethylenglycoldimaleinat | 25,8 |
| 22 | Triethylenglycoldimaleinat | 28,7 |
| 23 | Butandiolmaleinat | 24,0 |

Anwendungstechnische Beispiele

Die Calciumkarbonat-Dispergierkapazität wurde dadurch bestimmt, daß man 1 g des Copolymerisates in 100 ml destilliertem Wasser löste, bei Bedarf durch Zugabe von 1m Natronlauge neutral stellte und mit 10 ml 10%iger Sodalösung versetzte. Die Lösung wurde bei konstantem pH-Wert und konstanter Temperatur anschließend mit 0,25 m Calciumacetatlösung bis zur Trübung titriert. Der pH-Wert wurde entweder durch Zugabe von verdünnter Natronlauge- oder Salzsäure-Lösung eingestellt. Die Dispergierkapazität wurde bei 20°C und pH 11 sowie bei 80°C und pH 10 bestimmt. Die Ergebnisse sind in Tabelle 3 angegeben.

Tabelle 3

| | Copolymerisat gemäß Beispiel Nr. | Dispergierkapazität des Copolymerisats [mg $CaCO_3$/g Copolymerisat-Na-Salz]bei | |
|---|---|---|---|
| | | 20°C/pH 11 | 80°C/pH 10 |
| a) | 2 | 255 | 260 |
| b) | 3 | 350 | 380 |
| c) | 4 | 260 | 260 |
| d) | 5 | 240 | 220 |
| e) | 7 | 140 | 65 |
| f) | 14 | 120 | 70 |
| g) | 19 | 290 | 250 |
| h) | 20 | 310 | 270 |

Vergleichsbeispiel

| 1 | Homopolymerisat der Acrylsäure (K-Wert 30) | 110 | 55 |
|---|---|---|---|
| 2 | Copolymerisat aus Acrylsäure u. Maleinsäure Molverh. 80:20 K-Wert 70 | 245 | 200 |

## Ansprüche

1. Verfahren zur Herstellung von wasserlöslichen Copolymerisaten auf Basis von monoethylenisch ungesättigten Carbonsäuren mit K-Werten von 8 bis 100 (bestimmt am Na-Salz der Copolymerisate nach H. Fikentscher in wäßriger Lösung bei 25°C, einem pH-Wert von 7 und einer Polymerkonzentration des Na-Salzes von 1 Gew.%) durch Copolymerisieren von Monomermischungen aus
a) 98,5 bis 18,5 Mol% wenigstens einer monoethylenisch ungesättigten $C_3$- bis $C_6$-Monocarbonsäure,
b) 1,5 bis 20 Mol% wenigstens eines Comonomeren, das mindestens zwei ethylenisch ungesättigte, nicht konjugierte Doppelbindungen enthält, die durch mindestens eine Esterbindung voneinander getrennt sind,
c) 0 bis 80 Mol% wenigstens einer monoethylenisch ungesättigten $C_4$- bis $C_6$-Dicarbonsäure oder eines Anhydrids einer monoethylenisch ungesättigten Dicarbonsäure und
d) 0 bis 20 Mol% anderen, mit den Monomeren (a), (b) und (c) copolymerisierbaren, monoethylenisch ungesättigten Comonomeren,
wobei die Summe der Angaben in Mol% (a) bis (d) immer 100 beträgt, in Gegenwart von Polymerisationsinitiatoren und Polymerisationsreglern bei Temperaturen bis zu 200°C, dadurch gekennzeichnet, daß die Copolymerisation in mindestens einem inerten organischen Lösemittel durchgeführt wird.

2. Verfahren nach Anspruch 1, dadurch gekennzeichnet, daß als inerte organische Lösemittel Ether, Carbonsäureester, Kohlenwasserstoffe, halogenierte Kohlenwasserstoffe, gesättigte aliphatische Ketone und Alkohole eingesetzt werden.

3. Verfahren nach Anspruch 1, dadurch gekennzeichnet, daß die Copolymerisation als Fällungspolymerisation in $C_1$- bis $C_3$-Alkylbenzolen, aliphatischen, acyclischen $C_4$- bis $C_8$-Ketonen, halogenierten $C_1$- bis $C_4$-Alkanen oder deren Mischungen durchgeführt wird.

4. Verfahren nach Anspruch 1, dadurch gekennzeichnet, daß die Copolymerisation als Lösungspolymerisation in Dioxan, Tetrahydrofuran, Aceton, Cyclohexanon, einwertigen $C_1$- bis $C_4$-Alkoholen oder Mischungen dieser Lösemittel durchgeführt wird, wobei Dioxan, Tetrahydrofuran und $C_1$- bis $C_4$-Alkohole gleichzeitig Lösemittel und Regler sind.

5. Verfahren nach Anspruch 1, dadurch gekennzeichnet, daß die Copolymerisation als Suspensionspolymerisation in mindestens einem aliphatischen Kohlenwasserstoff durchgeführt wird.

6. Verfahren nach den Ansprüchen 1 bis 5, dadurch gekennzeichnet, daß Comonomere (b) eingesetzt werden, die erhältlich sind durch Umsetzung von
   (b1) Maleinsäureanhydrid, Itaconsäureanhydrid, Citraconsäureanhydrid oder deren Gemischen mit
   (b2) mindestens zweiwertigen 2 bis 6 C-Atome aufweisenden Alkoholen, Polyalkylenglykolen bis zu einem Molekulargewicht von 10 000, Polyglycerinen eines Molekulargewichts bis 2 000, Aminoalkoholen, Hydroxylamino- oder Hydroxydiaminocarbonsäuren, wasserlöslichen Copolymerisaten aus Ethylenoxid und Kohlendioxid, Allylalkohol, Hydroxyalkylester mit 2 bis 6 C-Atomen in der Hydroxyalkylgruppe von monoethylenisch ungesättigten $C_3$- bis $C_6$-Carbonsäuren oder von gesättigten $C_3$- bis $C_6$-Hydroxycarbonsäuren oder deren Mischungen

7. Verfahren nach den Ansprüchen 1 bis 5, dadurch gekennzeichnet, daß Comonomere (b) eingesetzt werden, die erhältlich sind durch Veresterung von
   (b3) Acrylsäure, Methacrylsäure, Crotonsäure, Vinylessigsäure oder deren Mischungen mit
   (b2) mindestens zweiwertigen 2 bis 6 C-Atome aufweisenden Alkoholen, Polyalkylenglykolen bis zu einem Molekulargewicht von 10 000, Polyglycerinen eines Molekulargewichts bis 2 000, Aminoalkoholen, Hydroxyamino- oder Hydroxydiaminocarbonsäuren, wasserlöslichen Copolymerisaten aus Ethylenoxid und Kohlendioxid, Allylalkohol, Hydroxyalkylester mit 2 bis 6 C-Atomen in der Hydroxyalkylgruppe von monoethylenisch ungesättigten $C_3$- bis $C_6$-Hydroxycarbonsäuren oder deren Mischungen.

8. Verfahren nach Anspruch 6, dadurch gekennzeichnet, daß man die Comonomeren (b), die durch Umsetzung von (b1) mit (b2) erhältlich sind, teilweise durch solche Comonomeren (b) ersetzt, die durch Umsetzung von
   (b3) Acrylsäure, Methacrylsäure, Crotonsäure, Vinylessigsäure oder deren Mischungen mit (b2) erhältlich sind.

9. Verfahren nach Anspruch 1, dadurch gekennzeichnet, daß Monomermischungen aus
(a) 98,5 bis 35 Mol% Acrylsäure oder Methacrylsäure,
(b) 1,5 bis 20 Mol% eines Diacrylats oder Dimethacrylats von Butandiol-1,4, Polypropylenglykolen eines Molekulargewichts von 134 bis 1016, Polyethylenglykolen eines Molekulargewichts von 106 bis 6 000,

14

Trimethylolpropantriacrylat und

(c) 0 bis 50 Mol% Maleinsäureanhydrid

in Tetrahydrofuran, Dioxan oder deren Mischungen eingesetzt werden.

10. Verfahren nach Anspruch 9, dadurch gekennzeichnet, daß als Comonomer (b) Maleinsäurehalbester eingesetzt werden, die durch Umsetzung von Maleinsäureanhydrid mit Ethylenglykol, Polyethylenglykol eines Molekulargewichts bis 6 000, Neopentylglykol und Butandiol-1,4 erhältlich sind.

11. Verwendung der nach den Ansprüchen 1 bis 10 erhältlichen Copolymerisate als Zusatz zu Wasch- und Reinigungsmitteln in Mengen von 0,5 bis 25 Gew.% .